(19) **Europäisches Patentamt**

**European Patent Office**

**Office européen des brevets**

(11) **EP 1 609 642 A1**

(12) **EUROPEAN PATENT APPLICATION**

(43) Date of publication:
**28.12.2005 Bulletin 2005/52**

(51) Int Cl.⁷: **B60H 1/32**

(21) Application number: **05253737.0**

(22) Date of filing: **16.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.06.2004 JP 2004182610**

(71) Applicant: **Sanden Corporation**
**Isesaki-shi, Gunma 372-8502 (JP)**

(72) Inventors:
• **Imai, Tomonori, c/o Sanden Corporation**
**Isesaki-shi, Gunma 372-8502 (JP)**
• **Tsuboi, Masato, c/o Sanden Corporation**
**Isesaki-shi, Gunma 372-8502 (JP)**

(74) Representative: **Haley, Stephen**
**Gill Jennings & Every,**
**Broadgate House,**
**7 Eldon Street**
**London EC2M 7LH (GB)**

(54) **Air conditioning system for vehicles**

(57)     An air conditioning system for vehicles comprising a refrigeration cycle having at least a variable displacement compressor, a condenser and an evaporator, and a displacement controlling means for outputting a displacement control signal to the compressor, characterized in that the system has a torque calculating means comprising at least two torque estimating means of a saturated area torque estimating means employed in a case where the compressor is driven at a maximum discharge amount and a displacement control area torque estimating means employed in a case where the compressor is driven at a discharge amount except the maximum discharge amount. It becomes possible to accurately estimate a compressor torque over all areas including the saturated area and the displacement control area.

# FIG. 4

**Description**

The present invention relates to an air conditioning system for vehicles, and, more specifically, to an air conditioning system for vehicles in which a torque of a compressor can be calculated more appropriately.

In an air conditioning system for vehicles having a refrigeration cycle which comprises a compressor, a condenser and an evaporator, a compressor torque is calculated, for example, based on a discharge pressure of refrigerant from the compressor, as disclosed in, for example, JP-A-2001-347828. Further, the compressor torque also can be calculated from a pressure difference between a discharged refrigerant pressure and a sucked refrigerant pressure, or a displacement control signal sent to the compressor.

However, when a variable displacement compressor is used and the displacement control signal sent to the compressor is changed so that the discharge amount of refrigerant of the compressor is increased, the discharge amount of refrigerant of the compressor becomes a maximum value at a certain displacement control signal, and thereafter, even if the displacement control signal is changed so that the discharge amount of refrigerant of the compressor is increased, the discharge amount does not change, and the compressor torque also does not change. Therefore, in the method for estimating the compressor torque from the displacement control signal of the variable displacement compressor, in a case where the discharge amount of the compressor becomes maximum, because the compressor torque does not change in response to the change of the displacement control signal, it is difficult to estimate a precise compressor torque.

It would be desirable to provide an air conditioning system for vehicles, which can accurately estimate a compressor torque over all areas including a saturated area where a discharge amount of a compressor becomes maximum and a displacement control area where the discharge amount is not maximum.

An air conditioning system for vehicles according to the present invention comprises a refrigeration cycle having at least a variable displacement compressor capable of changing a discharge amount of refrigerant, a condenser for condensing refrigerant and an evaporator for evaporating refrigerant, and a displacement controlling means for outputting a displacement control signal to said compressor. The air conditioning system is characterized in that the air conditioning system has a torque calculating means for calculating a torque of the compressor, and the torque calculating means comprises at least two torque estimating means of a saturated area torque estimating means employed in a case where the compressor is driven at a maximum discharge amount and a displacement control area torque estimating means employed in a case where the compressor is driven at a discharge amount except the maximum discharge amount.

In the air conditioning system, a minimum value among a value calculated by the saturated area torque estimating means and a value calculated by the displacement control area torque estimating means may be selected as an estimated torque value.

Thus, in the air conditioning system for vehicles according to the present invention, both the saturated area torque estimating means and the displacement control area torque estimating means are provided, and by setting equations for estimating torques different from each other between in the saturated area and the displacement control area, it becomes possible to accurately estimate a compressor torque over the entire area.

The air conditioning system may be constituted such that the air conditioning system further comprises an engine rotational speed detecting means for detecting a rotational speed of an engine of a vehicle or referring to a signal thereof, and an outside air temperature detecting means for detecting an outside air temperature, the compressor is a variable displacement compressor capable of controlling a pressure difference between a discharged refrigerant pressure and a sucked refrigerant pressure, and the displacement control area torque estimating means estimates a compressor torque based on at least the displacement control signal, the outside air temperature and the engine rotational speed.

Namely, in the displacement control area, the compressor torque is estimated by the pressure difference between a discharged refrigerant pressure and a sucked refrigerant pressure of the compressor, the outside air temperature and the engine rotational speed. Where, in a case where the system has a a variable displacement compressor capable of controlling a pressure difference between a discharged refrigerant pressure and a sucked refrigerant pressure, the compressor torque is estimated by the displacement control signal, the outside air temperature and the engine rotational speed. Further, because the pressure difference between a discharged refrigerant pressure and a sucked refrigerant pressure is greatly influenced by a heat radiation ability of air side of the condenser, by introducing the outside air temperature into a torque estimating equation, more accurate torque estimation becomes possible.

Further, the air conditioning system may be constituted such that the air conditioning system further comprises a high pressure detecting means for detecting a refrigerant pressure at a high-pressure side, and the displacement control area torque estimating means estimates the compressor torque further referring to the high-pressure side refrigerant pressure.

Namely, immediately after the displacement control signal is changed, it takes a time more or less to stabilize the pressure difference of refrigerant between the high-pressure side and the low-pressure side. During this time, because the pressure difference varies irrelevant to the value of the displacement control signal, the torque also varies. Accordingly, by detecting the high-pressure side refrigerant pressure, it becomes possible to estimate the torque more accurately in response to the pressure variation.

Further, the air conditioning system may be constituted such that the air conditioning system further comprises an engine rotational speed detecting means for detecting a rotational speed of an engine of a vehicle or referring to a signal thereof, an outside air temperature detecting means for detecting an outside air temperature, and a high pressure detecting means for detecting a refrigerant pressure at a high-pressure side, the compressor is a variable displacement compressor capable of controlling a sucked refrigerant pressure, and the displacement control area torque estimating means estimates a compressor torque based on at least the displacement control signal, the high-pressure side refrigerant pressure, the outside air temperature and the engine rotational speed.

Namely, in a case where a variable displacement compressor capable of controlling a sucked refrigerant pressure (that is, a usual variable displacement compressor) is used, in the displacement control area, it is possible to calculate a pressure difference between the discharged refrigerant and the sucked refrigerant of the compressor from a detected value of a high-pressure side refrigerant pressure sensor and an estimated value of the sucked refrigerant pressure estimated from the displacement control signal, and to estimate the compressor torque by the pressure difference, the outside air temperature and the engine rotational speed.

In such a structure, the air conditioning system may be constituted such that the air conditioning system further comprises means for detecting a physical value having a correlation with an amount of air passing through the condenser, and the displacement control area torque estimating means estimates the compressor torque further referring to the physical value having a correlation with the amount of air passing through the condenser.

Namely, although there are many vehicles performing to control an amount of air of a fan for a condenser at the time of idling, etc., in such a case, the heat radiation ability of air side of the condenser varies depending on a variation of the amount of air of the fan for the condenser, and it greatly affects the accuracy of the torque estimation. Therefore, by introducing the physical value having a correlation with the amount of air passing through the condenser, such as a voltage of the fan for the condenser, into the torque estimating equation, the accuracy of the compressor torque estimation may be increased.

Further, the air conditioning system may be constituted such that the air conditioning system further comprises means for detecting a physical value having a correlation with an amount of air passing through the evaporator, and the displacement control area torque estimating means estimates the compressor torque further referring to the physical value having a correlation with the amount of air passing through the evaporator.

Namely, when a thermal load in the evaporator increases, because a control for increasing the flow rate of refrigerant is carried out, the compressor torque also increases. Therefore, by introducing the physical value having a correlation with the amount of air passing through the evaporator, such as a voltage of a blower for sending air to be temperature-controlled to an interior of a vehicle through the evaporator, into the torque estimating equation, the accuracy of the compressor torque estimation may be increased.

Further, the air conditioning system may be constituted such that the air conditioning system further comprises a vehicle running speed recognizing means for detecting a vehicle running speed or referring to a signal of the vehicle running speed, and the displacement control area torque estimating means estimates the compressor torque further referring to the vehicle running speed.

Namely, when the vehicle running speed varies, because the velocity of the wind at the front position of the vehicle varies, the amount of air introduced into the condenser varies. Therefore, the heat radiation amount of the air side of the condenser varies, and it greatly affects the accuracy of the torque estimation. Accordingly, by introducing the vehicle running speed into the torque estimating equation, the accuracy of the compressor torque estimation may be increased in consideration of the velocity of the wind at the front position of the vehicle.

Further, the air conditioning system may be constituted such that the air conditioning system further comprises an engine rotational speed detecting means for detecting a rotational speed of an engine of a vehicle or referring to a signal thereof, a vehicle running speed recognizing means for detecting a vehicle running speed or referring to a signal of the vehicle running speed, and an outside air temperature detecting means for detecting an outside air temperature, the compressor is a variable displacement compressor capable of controlling a pressure difference between a discharged refrigerant pressure and a sucked refrigerant pressure, and the displacement control area torque estimating means estimates a power of the compressor based on at least the displacement control signal, the vehicle running speed and the outside air temperature, and estimates the compressor torque from the engine rotational speed and the estimated compressor power.

Namely, the pressure difference between a discharged refrigerant pressure and a sucked refrigerant pressure of the compressor also has a correlation with the power of the compressor. Here, in a case where a variable displacement compressor capable of controlling a pressure difference between a discharged refrigerant pressure is used, the power is estimated from the displacement control signal, the vehicle running speed and the outside air temperature. Because torque = k x (power/rotational speed) (k: a constant), if the power can be estimated, the torque can be calculated.

Further, the air conditioning system may be constituted such that the air conditioning system further comprises a high pressure detecting means for detecting a refrigerant pressure at a high-pressure side, and the displacement control area torque estimating means estimates the compressor power further referring to the high-pressure side refrigerant pressure, and estimates the compressor torque from the engine rotational speed and the estimated compressor power.

Namely, immediately after the displacement control signal is changed, it takes a time more or less to stabilize the pressure difference of refrigerant between the high-pressure side and the low-pressure side. During this time, because the pressure difference varies irrelevant to the value of the displacement control signal, the power of the compressor also varies. Accordingly, by detecting the high-pressure side refrigerant pressure, it becomes possible to estimate the power of the compressor more accurately in response to the pressure variation.

Further, the air conditioning system may be constituted such that the air conditioning system further comprises an engine rotational speed detecting means for detecting a rotational speed of an engine of a vehicle or referring to a signal thereof, a vehicle running speed recognizing means for detecting a vehicle running speed or referring to a signal of the vehicle running speed, an outside air temperature detecting means for detecting an outside air temperature, and a high pressure detecting means for detecting a refrigerant pressure at a high-pressure side, the compressor is a variable displacement compressor capable of controlling a sucked refrigerant pressure, and the displacement control area torque estimating means estimates a power of the compressor based on at least the displacement control signal, the high-pressure side refrigerant pressure, the vehicle running speed and the outside air temperature, and estimates the compressor torque from the engine rotational speed and the estimated compressor power.

Namely, in a case where a variable displacement compressor capable of controlling a sucked refrigerant pressure (that is, a usual variable displacement compressor) is used, it is possible to calculate a pressure difference between the discharged refrigerant and the sucked refrigerant of the compressor from a detected value of the high pressure detecting means (a high-pressure side refrigerant pressure sensor) and an estimated value of the sucked refrigerant pressure estimated from the displacement control signal, and to estimate the compressor power by the pressure difference, the outside air temperature and the engine rotational speed. Thereafter, the compressor torque can be calculated by the equation of torque = k x (power/rotational speed).

In these structures, the air conditioning system may be constituted such that the air conditioning system further comprises means for detecting a physical value having a correlation with an amount of air passing through the condenser, and the displacement control area torque estimating means estimates the compressor power further referring to the physical value having a correlation with the amount of air passing through the condenser, and estimates the compressor torque from the engine rotational speed and the estimated compressor power.

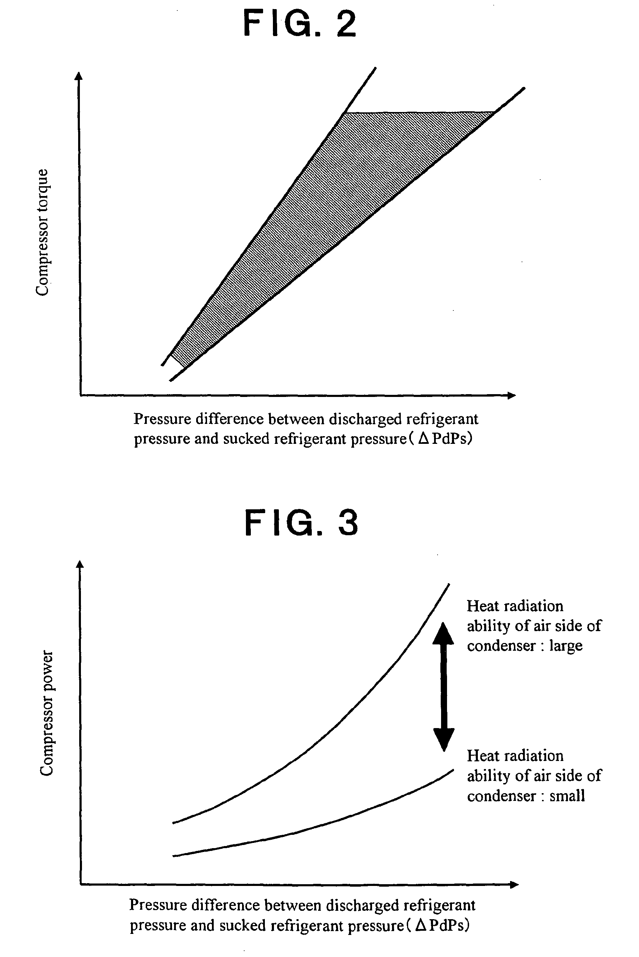

Namely, the correlation between the above-described pressure difference and the power is greatly influenced by the heat radiation ability of air side of the condenser (refer to Fig. 3 described later). Therefore, the compressor power is estimated referring to a voltage of a fan for the condenser, etc. as a factor for recognizing a variation of the amount of air passing through the condenser (the velocity of the wind at a front position of the condenser) which greatly affects the heat radiation ability of air side of the condenser. Thereafter, the compressor torque can be calculated by the equation of torque = k x (power/rotational speed).

Further, the air conditioning system may be constituted such that the air conditioning system further comprises means for detecting a physical value having a correlation with an amount of air passing through the evaporator, and the displacement control area torque estimating means estimates the compressor power further referring to the physical value having a correlation with said amount of air passing through the evaporator, and estimates the compressor torque from the engine rotational speed and the estimated compressor power.

Namely, when a thermal load in the evaporator increases, because a control for increasing the flow rate of refrigerant is carried out, the compressor power also increases. Therefore, the compressor power is estimated referring to a voltage of a blower, etc. as the physical value having a correlation with an amount of air passing through the evaporator. Thereafter, the compressor torque can be calculated by the equation of torque = k x (power/rotational speed).

Further, the air conditioning system may be constituted such that the air conditioning system further comprises an engine rotational speed detecting means for detecting a rotational speed of an engine of a vehicle or referring to a signal thereof, and an outside air temperature detecting means for detecting an outside air temperature, and the saturated area torque estimating means estimates a compressor torque based on at least the outside air temperature and the engine rotational speed.

Namely, because the torque does not vary relative to a variation of the displacement control signal in the saturated area, the compressor torque is estimated using parameters except the displacement control signal (outside air temperature, rotational speed, etc.).

Further, the air conditioning system may be constituted such that the air conditioning system further comprises a high pressure detecting means for detecting a refrigerant pressure at a high-pressure side, and the saturated area torque estimating means estimates the compressor torque further referring to the high-pressure side refrigerant pressure.

Namely, because the high-pressure side refrigerant pressure has a correlation with the compressor torque, it becomes possible to estimate the compressor torque more accurately by referring to the high-pressure side refrigerant pressure.

In these structures, the air conditioning system may be constituted such that the air conditioning system further comprises means for detecting a physical value having a correlation with an amount of air passing through the condenser, and the saturated area torque estimating means estimates the compressor torque further referring to the physical value having a correlation with the amount of air passing through the condenser.

Namely, as aforementioned, in a case where a control of an amount of air of a fan for a condenser is carried out at the time of idling, etc., the heat radiation ability of air side of the condenser varies depending on a variation of the amount of air of the fan for the condenser, and it greatly affects the accuracy of the torque estimation. Therefore, by introducing the physical value having a correlation with the amount of air passing through the condenser, such as a voltage of the fan for the condenser, into the torque estimating equation, the accuracy of the compressor torque estimation may be increased.

Further, the air conditioning system may be constituted such that the air conditioning system further comprises means for detecting a physical value having a correlation with an amount of air passing through the evaporator, and the saturated area torque estimating means estimates the compressor torque further referring to the physical value having a correlation with the amount of air passing through the evaporator.

Namely, when a thermal load in the evaporator increases, because a control for increasing the flow rate of refrigerant is carried out, the compressor torque also increases. Therefore, by introducing the physical value having a correlation with the amount of air passing through the evaporator, such as a voltage of a blower for sending air to be temperature-controlled to an interior of a vehicle through the evaporator, into the torque estimating equation, the accuracy of the compressor torque estimation may be increased.

Further, the air conditioning system may be constituted such that the air conditioning system further comprises a vehicle running speed recognizing means for detecting a vehicle running speed or referring to a signal of the vehicle running speed, and the saturated area torque estimating means estimates the compressor torque further referring to the vehicle running speed.

Namely, as aforementioned, when the vehicle running speed varies, because the velocity of the wind at the front position of the vehicle varies, the amount of air introduced into the condenser varies. Therefore, the heat radiation amount of the air side of the condenser varies, and it greatly affects the accuracy of the torque estimation. Accordingly, by introducing the vehicle running speed into the torque estimating equation, the accuracy of the compressor torque estimation may be increased in consideration of the velocity of the wind at the front position of the vehicle.

Further, the air conditioning system may be constituted such that the saturated area torque estimating means uses a predetermined value as an estimated compressor torque. Namely, in the saturated area, because the discharge amount of the compressor is presumed as a maximum amount, there is no great variation of torque. Therefore, the saturated area torque estimating means may decide a certain predetermined value as the estimated compressor torque value.

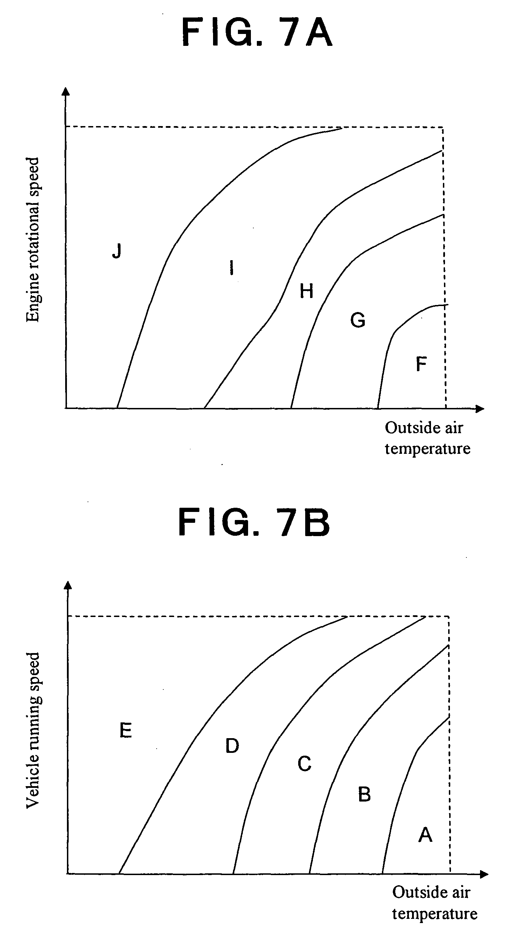

Further, the air conditioning system may be constituted such that the saturated area torque estimating means figures out an estimated compressor torque by using an estimated torque value map in which an estimated torque value is determined relatively to an outside air temperature, an engine rotational speed or a vehicle running speed. Namely, it is possible to estimate the compressor torque from a map, which has been determined by an experiment carried out beforehand, as shown in Fig. 7 described later.

The information of the estimated compressor torque calculated as described above may be sent to an engine control unit (an engine electronic control unit [engine ECU]). By sending the information of the estimated compressor torque to the engine ECU, an optimum output of the engine for a vehicle may be determined.

Thus, in the air conditioning system for vehicles according to the present invention, it becomes possible to estimate a compressor torque at a high accuracy and to realize a desirable air conditioning for a vehicle, over all areas including a saturated area where a discharge amount of the compressor becomes maximum and a displacement control area where the discharge amount is not maximum.

Further features and advantages of the present invention will be understood from the following detailed description of the preferred embodiments of the present invention with reference to the accompanying figures, of which:

Fig. 1 is a schematic diagram of an air conditioning system for vehicles according to an embodiment of the present invention.
Fig. 2 is a graph showing a relationship between a pressure difference between discharged refrigerant pressure and sucked refrigerant pressure and a compressor torque.
Fig. 3 is a graph showing a relationship between a pressure difference between discharged refrigerant pressure and sucked refrigerant pressure and a compressor power.

Fig. 4 is a graph showing a relationship between a displacement control signal and a compressor torque in a displacement control area and a saturated area.

Fig. 5 is a graph showing a relationship between a displacement control signal and an estimated compressor torque, in particular, showing a torque estimating equation in a displacement control area and an estimated compressor torque relative to the displacement control signal for the torque estimating equation.

Fig. 6 is a flowchart showing an example of the control in the present invention.

Figs. 7A and 7B are schematic graphs showing maps for determining an estimated torque value in a saturated area.

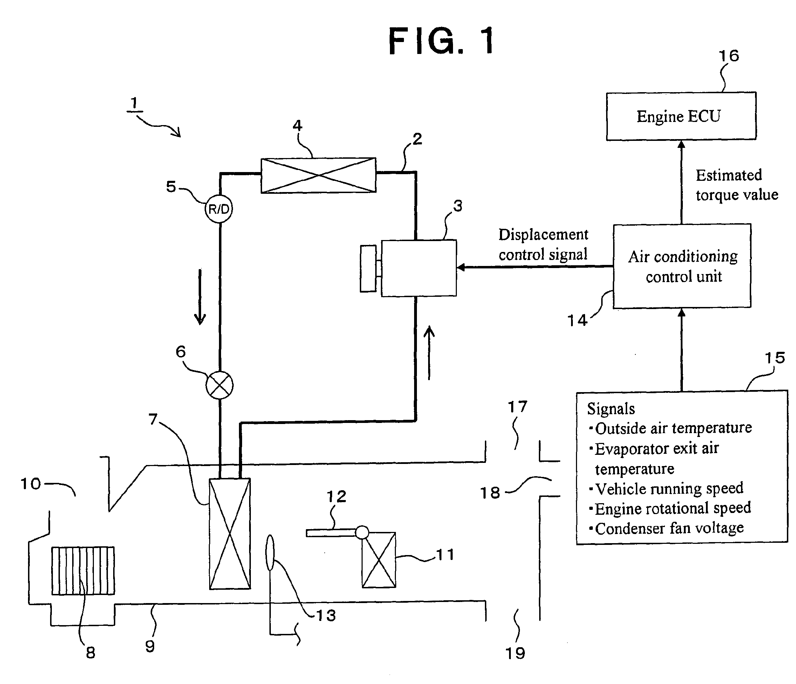

Fig. 1 depicts an air conditioning system for vehicles 1 according to an embodiment of the present invention. In Fig. 1, in a refrigeration cycle 2, a variable displacement compressor 3 capable of changing its discharge amount, which is driven by an engine for a vehicle, etc. (not shown), is provided, and the drive force of the engine is transmitted to the compressor via an electromagnetic clutch, etc. Refrigerant is circulated in the refrigerant tubes in refrigeration cycle 2, the high-temperature and high-pressure refrigerant compressed by compressor 3 is heat-exchanged with outside air by a condenser 4, cooled, condensed and liquefied. Gas-phase refrigerant and liquid-phase refrigerant are separated by a receiver drier 5, and the liquid refrigerant is expanded and reduced in pressure by an expansion mechanism 6 (an expansion valve). The low-pressure refrigerant reduced in pressure flows into an evaporator 7, and it is heat-exchanged with air sent by a blower 8. The refrigerant evaporated in evaporator 7 is sucked again into compressor 3 and compressed therein.

Blower 8 is disposed in an air duct 9 through which air for air conditioning of an interior of a vehicle passes, and air sucked from a suction port 10 is sent toward evaporator 7 by blower 8. A part of air having passed through evaporator 7 is sent to a heater unit 11 disposed downstream, and the rate of the amount of air passing through heater unit 11 to the amount of air bypassing heater unit 11 is adjusted by an air mixing damper 12. In this embodiment, an evaporator exit air temperature sensor 13 is provided at a position of an exit side of evaporator 7 for detecting a temperature of air after passing through evaporator 7, and the signal of the detected temperature is sent to an air conditioning control unit 14 for controlling the air conditioning. A saturated area torque estimating means and a displacement control area torque estimating means according to the present invention are incorporated into this air conditioning control unit 14, and this air conditioning control unit 14 also functions as a control unit for controlling the entire air conditioning for the vehicle in this embodiment.

To this air conditioning control unit 14, various signals except the signal of the temperature detected by the above-described evaporator exit air temperature sensor 13 are sent. In this embodiment, a group of signals 15 of at least a signal of an outside air temperature detected by an outside air temperature sensor, a signal of an air temperature detected by the above-described evaporator exit air temperature sensor 13, a signal of a vehicle running speed, a signal of an engine rotational speed, a signal of a voltage of a fan for a condenser as a physical value having a correlation with an amount of air passing through the condenser, etc. are inputted to air conditioning control unit 14. From air conditioning control unit 14, a displacement control signal is outputted to variable displacement compressor 3, and information of an estimated compressor torque is sent to an engine ECU 16 (an engine electronic control unit).

Respective air discharge ports 17, 18 and 19 such as a DEF-mode air discharge port, a VENT-mode air discharge port and a FOOT-mode air discharge port are provided at downstream positions of air duct 9, and these ports are selectively opened/closed by respective dampers (not shown).

In such an air conditioning system 1, the control according to the present invention will be carried out as follows.

Fig. 2 shows a relationship between a pressure difference $\Delta PdPs$ between the discharged refrigerant pressure and the sucked refrigerant pressure and a compressor torque, which has been investigated by an experiment, and in the graph depicted in Fig. 2, the actual data of the two values are distributed within the area shown by hatching. It is decided mainly by the rotational speed of the compressor and the heat radiation ability of air side of the condenser as to at which position within the area the data are stabilized. Because the heat radiation ability of air side of the condenser is greatly influenced by the outside air temperature, the velocity of the wind at a front position of a vehicle and a voltage of a fan for the condenser, by introducing these data into a torque estimating equation, it becomes possible to estimate a compressor torque more accurately.

Further, in the air conditioning system according to the present invention, as aforementioned, the compressor torque may be estimated (calculated) after directly calculating a compressor power. Fig. 3 shows a relationship between a pressure difference $\Delta PdPs$ between the discharged refrigerant pressure and the sucked refrigerant pressure and a compressor power, which has been determined by an experiment, for reference in such a case. As shown in Fig. 3, the compressor power relative to the pressure difference $\Delta PdPs$ is greatly influenced by the heat radiation ability of air side of the condenser.

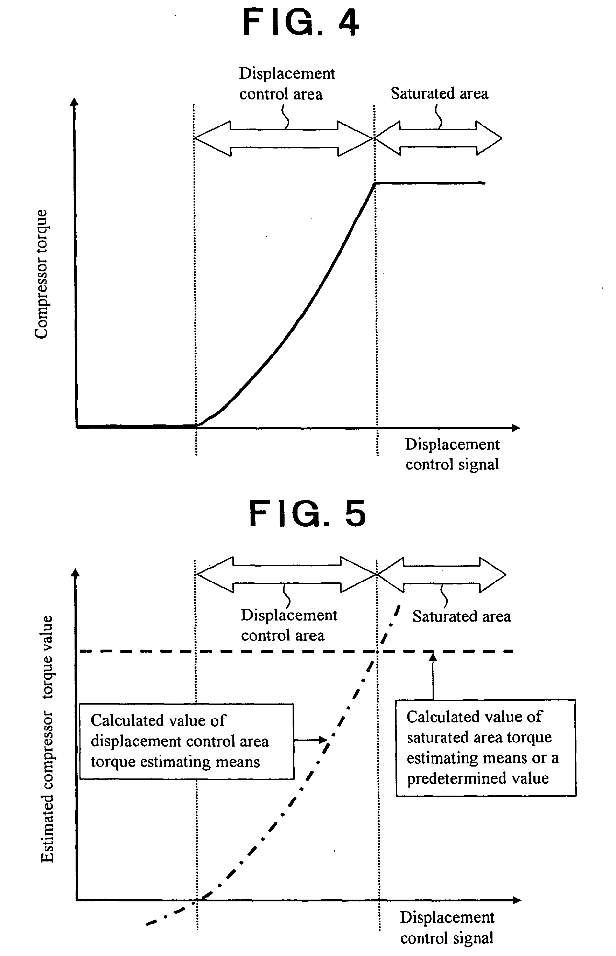

Fig. 4 shows a relationship between a displacement control signal and a compressor torque, and particularly, shows a displacement control area, in which a compressor torque varies in response to a displacement control signal, and a saturate area, in which, when the displacement control signal is increased, the discharge amount becomes maximum at a certain point, and thereafter, even if the displacement control signal is changed in the direction for increasing the discharge amount, the compressor torque is not changed. As aforementioned, in this saturated area, even if the displacement control signal is changed in the direction for increasing the discharge amount, the compressor torque does not change as it is, that is, as it is in a condition exhibiting the maximum value.

Fig. 5 shows an example for estimating a compressor torque relatively to the above-described displacement control area and saturated area. and shows a calculated value due to a torque estimating equation in the displacement control area (a calculated value due to a displacement control area torque estimating means) and a calculated value due to a torque estimating equation in the saturated area (a calculated value due to a saturated area torque estimating means). As shown in Fig. 5, by selecting a smaller calculated value in the two calculated values over the entire area, it becomes possible to estimate the compressor torque at a high accuracy in both the displacement control area and the saturated area.

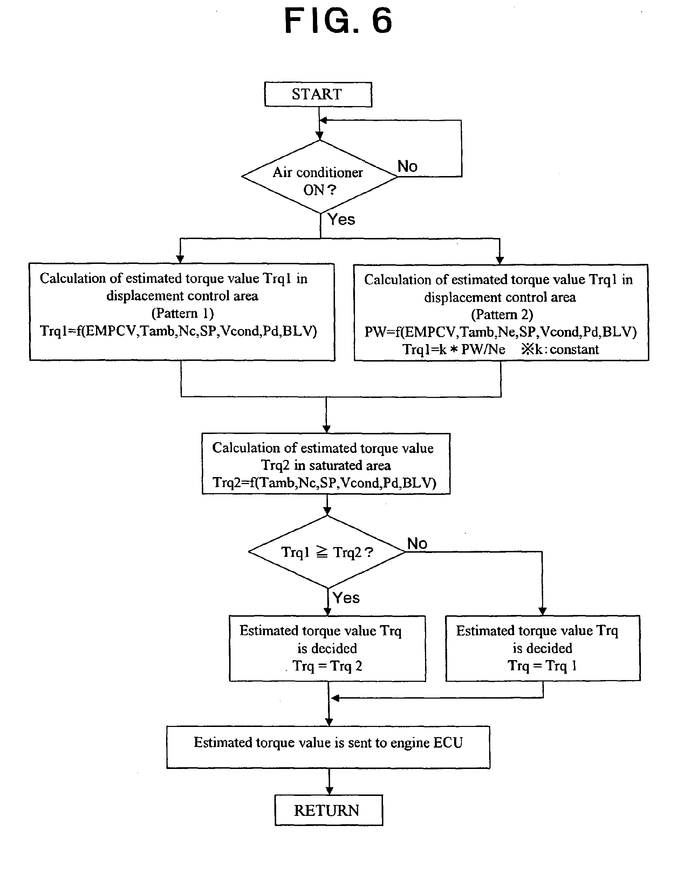

Fig. 6 depicts a flowchart showing an example for calculating the above-described compressor torque.

In a case of air conditioner ON, first, an estimated value Trq1 is calculated by the displacement control area torque estimating means. Where, there are two methods as calculating means of Trq1.

(1) Method for directly calculating a compressor torque:

The compressor torque Trq1 is calculated by the following equation (Pattern 1).

$$Trq1=f(EMPCV, Tamb, Ne, SP, Vcond, Pd, BLV)$$

Where,
EMPCV: displacement control signal
Tamb: outside air temperature (°C)
Ne: engine rotational speed (rpm) (instead, a compressor rotational speed Nc may be employed. In Fig. 6, it is shown using a compressor rotational speed Nc.)
SP: vehicle running speed (km/h)
Vcond: voltage of fan for condenser (V)
Pd: high-pressure side refrigerant pressure (MPa)
BLV: voltage of blower (V)

(2) Method for calculating a compressor torque after directly calculating a compressor power (PW):

The compressor power (PW) is calculated by the following equation (Pattern 2).

$$PW=f(EMPCV, Tamb, Ne, SP, Vcond, Pd, BLV)$$

After that, the compressor torque is calculated by the following equation.

$$Trq1=k*PW/Ne$$

Where, "k" is a constant.
Further, an estimated value Trq2 is calculated by the saturated area torque estimating means as follows.

$$Trq2=f(Tamb, Ne, SP, Vcond, Pd, BLV)$$

Where, as Trq2, a predetermined value K may be employed, as aforementioned.
Further, as shown in Figs. 7A and 7B, Trq2 may be determined using predetermined maps such as a map predetermining estimated torque values (F to J) in accordance with outside air temperature and engine rotational speed (Fig. 7A) and a map predetermining estimated torque values (A to E) in accordance with outside air temperature and vehicle running speed (Fig. 7B).
In Fig. 6, after Trq1 and Trq2 are calculated, a smaller value is determined as an estimated torque value Trq. Namely, the estimated torque value Trq is decided as either Trq1 or Trq2. The decided Trq is then outputted to the engine ECU. By referring to this output value, an optimum engine drive condition may be decided in accordance with the present compressor torque at the air conditioning system, and a more desirable air conditioning may be realized.
The control according to the present invention can be applied to any air conditioning system having a refrigeration cycle comprising a variable displacement compressor, and can estimate a compressor torque more accurately and can realize a more desirable air conditioning for a vehicle.

**Claims**

**1.** An air conditioning system for vehicles comprising a refrigeration cycle having at least a variable displacement compressor capable of changing a discharge amount of refrigerant, a condenser for condensing refrigerant and an evaporator for evaporating refrigerant, and a displacement controlling means for outputting a displacement control signal to said compressor, **characterized in that** said air conditioning system has a torque calculating means for calculating a torque of said compressor, and said torque calculating means comprises at least two torque estimating means of a saturated area torque estimating means employed in a case where said compressor is driven at a maximum discharge amount and a displacement control area torque estimating means employed in a case where said compressor is driven at a discharge amount except said maximum discharge amount.

2. The air conditioning system according to claim 1, wherein a minimum value among a value calculated by said saturated area torque estimating means and a value calculated by said displacement control area torque estimating means is selected as an estimated torque value.

3. The air conditioning system according to claim 1 or 2, wherein said air conditioning system further comprises an engine rotational speed detecting means for detecting a rotational speed of an engine of a vehicle or referring to a signal thereof, and an outside air temperature detecting means for detecting an outside air temperature, said compressor is a variable displacement compressor capable of controlling a pressure difference between a discharged refrigerant pressure and a sucked refrigerant pressure, and said displacement control area torque estimating means estimates a compressor torque based on at least said displacement control signal, said outside air temperature and said engine rotational speed.

4. The air conditioning system according to claim 3, wherein said air conditioning system further comprises a high pressure detecting means for detecting a refrigerant pressure at a high-pressure side, and said displacement control area torque estimating means estimates said compressor torque further referring to said high-pressure side refrigerant pressure.

5. The air conditioning system according to claim 1 or 2, wherein said air conditioning system further comprises an engine rotational speed detecting means for detecting a rotational speed of an engine of a vehicle or referring to a signal thereof, an outside air temperature detecting means for detecting an outside air temperature, and a high pressure detecting means for detecting a refrigerant pressure at a high-pressure side, said compressor is a variable displacement compressor capable of controlling a sucked refrigerant pressure, and said displacement control area torque estimating means estimates a compressor torque based on at least said displacement control signal, said high-pressure side refrigerant pressure, said outside air temperature and said engine rotational speed.

6. The air conditioning system according to any of claims 3 to 5, wherein said air conditioning system further comprises means for detecting a physical value having a correlation with an amount of air passing through said condenser, and said displacement control area torque estimating means estimates said compressor torque further referring to said physical value having a correlation with said amount of air passing through said condenser.

7. The air conditioning system according to any of claims 3 to 5, wherein said air conditioning system further comprises means for detecting a physical value having a correlation with an amount of air passing through said evaporator, and said displacement control area torque estimating means estimates said compressor torque further referring to said physical value having a correlation with said amount of air passing through said evaporator.

8. The air conditioning system according to any of claims 3 to 5, wherein said air conditioning system further comprises a vehicle running speed recognizing means for detecting a vehicle running speed or referring to a signal of said vehicle running speed, and said displacement control area torque estimating means estimates said compressor torque further referring to said vehicle running speed.

9. The air conditioning system according to claim 1 or 2, wherein said air conditioning system further comprises an engine rotational speed detecting means for detecting a rotational speed of an engine of a vehicle or referring to a signal thereof, a vehicle running speed recognizing means for detecting a vehicle running speed or referring to a signal of said vehicle running speed, and an outside air temperature detecting means for detecting an outside air temperature, said compressor is a variable displacement compressor capable of controlling a pressure difference between a discharged refrigerant pressure and a sucked refrigerant pressure, and said displacement control area torque estimating means estimates a power of said compressor based on at least said displacement control signal, said vehicle running speed and said outside air temperature, and estimates said compressor torque from said engine rotational speed and said estimated compressor power.

10. The air conditioning system according to claim 9, wherein said air conditioning system further comprises a high pressure detecting means for detecting a refrigerant pressure at a high-pressure side, and said displacement control area torque estimating means estimates said compressor power further referring to said high-pressure side refrigerant pressure, and estimates said compressor torque from said engine rotational speed and said estimated compressor power.

11. The air conditioning system according to claim 1 or 2, wherein said air conditioning system further comprises an engine rotational speed detecting means for detecting a rotational speed of an engine of a vehicle or referring to a signal thereof, a vehicle running speed recognizing means for detecting a vehicle running speed or referring to a signal of said vehicle running speed, an outside air temperature detecting means for detecting an outside air temperature, and a high pressure detecting means for detecting a refrigerant pressure at a high-pressure side, said compressor is a variable displacement compressor capable of controlling a sucked refrigerant pressure, and said displacement control area torque estimating means estimates a power of said compressor based on at least said displacement control signal, said high-pressure side refrigerant pressure, said vehicle running speed and said outside air temperature, and estimates said compressor torque from said engine rotational speed and said estimated compressor power.

12. The air conditioning system according to any of claims 9 to 11, wherein said air conditioning system further comprises means for detecting a physical value having a correlation with an amount of air passing through said condenser, and said displacement control area torque estimating means estimates said compressor power further referring to said physical value having a correlation with said amount of air passing through said condenser, and estimates said compressor torque from said engine rotational speed and said estimated compressor power.

13. The air conditioning system according to any of claims 9 to 11, wherein said air conditioning system further comprises means for detecting a physical value having a correlation with an amount of air passing through said evaporator, and said displacement control area torque estimating means estimates said compressor power further referring to said physical value having a correlation with said amount of air passing through said evaporator, and estimates said compressor torque from said engine rotational speed and said estimated compressor power.

14. The air conditioning system according to claim 1 or 2, wherein said air conditioning system further comprises an engine rotational speed detecting means for detecting a rotational speed of an engine of a vehicle or referring to a signal thereof, and an outside air temperature detecting means for detecting an outside air temperature, and said saturated area torque estimating means estimates a compressor torque based on at least said outside air temperature and said engine rotational speed.

15. The air conditioning system according to claim 14, wherein said air conditioning system further comprises a high pressure detecting means for detecting a refrigerant pressure at a high-pressure side, and said saturated area torque estimating means estimates said compressor torque further referring to said high-pressure side refrigerant pressure.

16. The air conditioning system according to claim 14, wherein said air conditioning system further comprises means for detecting a physical value having a correlation with an amount of air passing through said condenser, and said saturated area torque estimating means estimates said compressor torque further referring to said physical value having a correlation with said amount of air passing through said condenser.

17. The air conditioning system according to claim 14, wherein said air conditioning system further comprises means for detecting a physical value having a correlation with an amount of air passing through said evaporator, and said saturated area torque estimating means estimates said compressor torque further referring to said physical value having a correlation with said amount of air passing through said evaporator.

18. The air conditioning system according to claim 14, wherein said air conditioning system further comprises a vehicle running speed recognizing means for detecting a vehicle running speed or referring to a signal of said vehicle running speed, and said saturated area torque estimating means estimates said compressor torque further referring to said vehicle running speed.

19. The air conditioning system according to claim 1 or 2, wherein said saturated area torque estimating means uses a predetermined value as an estimated compressor torque.

20. The air conditioning system according to claim 1 or 2, wherein said saturated area torque estimating means figures out an estimated compressor torque by using an estimated torque value map in which an estimated torque value is determined relatively to an outside air temperature, an engine rotational speed or a vehicle running speed.

21. The air conditioning system according to any preceding claim, wherein an information of said estimated compressor torque is sent to an engine control unit.

# FIG. 1

Engine ECU `16`

Estimated torque value

Displacement control signal

Air conditioning control unit `14`

Signals `15`
- Outside air temperature
- Evaporator exit air temperature
- Vehicle running speed
- Engine rotational speed
- Condenser fan voltage

EP 1 609 642 A1

# FIG. 2

Compressor torque

Pressure difference between discharged refrigerant
pressure and sucked refrigerant pressure ( $\Delta$ PdPs)

# FIG. 3

Compressor power

Heat radiation
ability of air side of
condenser : large

Heat radiation
ability of air side of
condenser : small

Pressure difference between discharged refrigerant
pressure and sucked refrigerant pressure ( $\Delta$ PdPs)

EP 1 609 642 A1

# FIG. 4

Displacement control area

Saturated area

Compressor torque

Displacement control signal

# FIG. 5

Displacement control area

Saturated area

Estimated compressor torque value

Calculated value of displacement control area torque estimating means

Calculated value of saturated area torque estimating means or a predetermined value

Displacement control signal

12

# FIG. 6

START

Air conditioner ON? — No

Yes

Calculation of estimated torque value Trq1 in displacement control area
(Pattern 1)
Trq1=f(EMPCV,Tamb,Nc,SP,Vcond,Pd,BLV)

Calculation of estimated torque value Trq1 in displacement control area
(Pattern 2)
PW=f(EMPCV,Tamb,Ne,SP,Vcond,Pd,BLV)
Trq1=k * PW/Ne    ※k : constant

Calculation of estimated torque value Trq2 in saturated area
Trq2=f(Tamb,Nc,SP,Vcond,Pd,BLV)

Trq1 ≧ Trq2 ? — No

Yes

Estimated torque value Trq is decided
Trq = Trq 2

Estimated torque value Trq is decided
Trq = Trq 1

Estimated torque value is sent to engine ECU

RETURN

13

# FIG. 7A

Engine rotational speed

J

I

H

G

F

Outside air temperature

# FIG. 7B

Vehicle running speed

E

D

C

B

A

Outside air temperature

**European Patent Office**

# EUROPEAN SEARCH REPORT

Application Number

EP 05 25 3737

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 2004/005059 A (VALEO CLIMATISATION; BEN YAHIA, MOHAMED; LIU, JIN MING; THUEZ, JEAN-LU) 15 January 2004 (2004-01-15) * page 3 - pages 15,18; figures 3-5 * ----- | 1-21 | B60H1/32 |
| A | DE 100 53 438 A1 (SANDEN CORP., ISESAKI) 10 May 2001 (2001-05-10) * figure 2 * | 2,6-8 | |
| A | * page 5 * ----- | 8,11,18 | |
| A | EP 1 111 238 A (KABUSHIKI KAISHA TOYOTA JIDOSHOKKI) 27 June 2001 (2001-06-27) * paragraph [0070] * ----- | 8,11,18 | |

| | |
|---|---|
| | **TECHNICAL FIELDS SEARCHED (Int.Cl.7)** |
| | B60H |

The present search report has been drawn up for all claims

| Place of search | Date of completion of the search | Examiner |
|---|---|---|
| Munich | 5 October 2005 | Gumbel, A |

EPO FORM 1503 03.82 (P04C01)

**ANNEX TO THE EUROPEAN SEARCH REPORT
ON EUROPEAN PATENT APPLICATION NO.**                EP 05 25 3737

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2005

| Patent document cited in search report | | Publication date | Patent family member(s) | | Publication date |
|---|---|---|---|---|---|
| WO 2004005059 | A | 15-01-2004 | AU<br>FR | 2003260634 A1<br>2841828 A1 | 23-01-2004<br>09-01-2004 |
| DE 10053438 | A1 | 10-05-2001 | FR | 2801844 A1 | 08-06-2001 |
| EP 1111238 | A | 27-06-2001 | BR<br>CN<br>JP<br>US | 0006270 A<br>1301918 A<br>2001180261 A<br>2001008131 A1 | 18-09-2001<br>04-07-2001<br>03-07-2001<br>19-07-2001 |

EPO FORM P0459

For more details about this annex : see Official Journal of the European Patent Office, No. 12/82